# EUROPEAN PATENT SPECIFICATION

(11) **EP 3 032 906 B1**
(45) Date of publication and mention of the grant of the patent: **19.04.2017**
(21) Application number: 14307016.7
(22) Date of filing: 12.12.2014
(51) Int. Cl.: H04W 72/06, H04W 72/08

(54) **METHOD AND DEVICE FOR CONTROLLING SIGNAL TRANSMISSION FROM NON-OTDOA CELLS TO COMMUNICATION EQUIPMENTS IN A WIRELESS COMMUNICATION NETWORK**
VERFAHREN UND VORRICHTUNG ZUR STEUERUNG DER SIGNALÜBERTRAGUNG VON NICHT-OTDOA-ZELLEN AN KOMMUNIKATIONSEINRICHTUNGEN IN EINEM DRAHTLOSEN KOMMUNIKATIONSNETZWERK
PROCÉDÉ ET DISPOSITIF DE COMMANDE DE TRANSMISSION DE SIGNAL À PARTIR DE CELLULES NON-OTDOA POUR ÉQUIPEMENTS DE COMMUNICATION DANS UN RÉSEAU DE COMMUNICATION SANS FIL

(43) Date of publication of application: 15.06.2016
(73) Proprietor: ALCATEL LUCENT, 92100 Boulogne-Billancourt (FR)
(72) Inventor: Capdevielle, Véronique, 91620 NOZAY (FR); Ben Rached, Nidham, 91620 NOZAY (FR); Krief, Patrick-Albert, NOZAY 91620 (FR)
(74) Representative: Berthier, Karine

(56) References cited:
- US-A1- 2013 294 401
- QUALCOM TECHNOLOGIES, INC: "Introduction to otdoa on lte networks", QUALCOMM WHITE PAPER, 7 August 2014 (2014-08-07), - 7 August 2014 (2014-08-07), pages 1-18, XP002739955,

## Description

### Field of the Invention

The present invention relates to wireless communication networks, and more precisely to signal transmission from cells to wireless communication equipments in such networks.

### Background

In some countries or areas, such as North America, communication networks offer a feature that automatically links emergency calls with public safety resources. For instance, in North America this feature is called "Enhanced 911" (or E911). Such a feature is defined by a set of rules that must be fulfilled by Voice over Internet Protocol (or VoIP) service providers. For instance, this set may impose that 911 calls be transmitted to Public Safety Answering Points (or PSAPs), and that the PSAP be provided with the phone number of the communication equipment that has initiated the emergency call, the location of the base station to which this communication equipment is attached, and with the accurate position of this communication equipment.

Satisfying the stringent location accuracy requirements appears to be a difficult task for wireless service providers.

Indeed, when communication equipments are served by base stations of short radius cells (typically lower than fifty meters), the position of the serving cell is accurate enough to locate an emergency calls. But when communication equipments are served by base stations of larger radius cells (i.e. macro cells), localization (or positioning) methods, such as Observed Time Difference Of Arrival (or OTDOA), must be implemented to improve the localization precision.

It is recalled that OTDOA is a localization (or positioning) method that has been introduced in 3GPP Release 9 (for LTE). It is a multilateration method based on Reference Signal Time Differences (or RSTDs) measurements that are relative timing differences between.a reference cell and neighbor cells. These RSTDs are measured from specific signals called Positioning Reference Signals (PRSs) that are transmitted by base stations such as e-Node Bs (or eNBs). PRSs are pseudo random QPSK sequences with high "hearability" performances that allow them to be detectable at low Signal to Interference and Noise Ratio (or SINR) (typically -13 dB). Hearability of PRSs is critical to guarantee the required localization performance. Indeed, the localization accuracy depends on the number of "heard" PRS involved in OTDOA method.

PRSs patterns are orthogonal, with an effective frequency reuse that is generally equal to six. Moreover, PRSs may occupy either the full bandwidth or only the center Physical Resource Blocks (or PRBs), and are transmitted in predefined positioning subframes, grouped in consecutive subframes (generally 1, 2, 4 or 6 consecutive subframes), during PRS time intervals (or occasions) with a configurable period (typically 160 ms, 320 ms, 640 ms or 1280 ms according to 3GPP TS 36.211). At each PRS occasion, PRSs are transmitted with a constant power.

When PRS occasions are aligned in synchronous networks, simultaneous PRS transmissions (with same pattern index) may occur, which induces interferences that disrupt PRS measurements. In order to mitigate these interferences, some PRSs can be transmitted with zero power (i.e. muted), according to a muting sequence. This muting sequence defines the time intervals (or PRS occasions) during which a cell has to transmit with full power or has to be muted.

This "muting" solution allows improving hearability of PRSs and then enhancing positioning performances. But it concerns only cells participating in the OTDOA method (for instance micro cells), and therefore interferences originating from data channel (or PDSCH) transmissions of non-OTDOA cells (generally small cells) may also disrupt PRS measurements, which results in poor positioning accuracy.

In shared carrier scenarios (where OTDOA cells and non-OTDOA cells operate on the same carrier frequency), the best existing solution to this last problem consists in not scheduling PDSCH transmissions of non-OTDOA cells during PRS occasions. This solution, called OTDOA blanking, has an important drawback: signal transmission is frozen during PRS occasions which impacts the network capacity.

When OTDOA blanking is not supported by a cell there is no known solution for improving the situation.

### Summary

So an object of this invention is to improve the situation, and more precisely to reduce interference from transmissions of non-OTDOA cells on PRS signals, during PRS occasions, in order to enhance PRS hearability and then localization accuracy of communication equipments during emergency calls.

In an embodiment, a method is intended for transmitting signals on N carriers from first and second cells of a wireless communication network to communication equipments, these first cells participating in an Observed Time Difference Of Arrival method, hereafter called OTDOA and comprising transmission of Positioning Reference Signals, hereafter called PRSs, during scheduled PRS time intervals (or occasions), while the second cell(s) do(es) not participate to OTDOA. This method comprises scheduling signal transmission of each second cell over a corresponding one of the N carriers during each scheduled PRS time interval, while blanking the N-1 remaining carriers, and over any one of the N carriers between the scheduled PRS time intervals.

This allows reducing interferences from signal transmissions of second cells, on PRS signals, during PRS occasions, and then for enhancing PRS hearability and localization accuracy of communication equipments.

The method may include additional characteristics considered separately or combined, and notably:
- each second cell may choose one of the N carriers for each scheduled PRS time interval depending on a chosen metric;
- the metric may be representative of a density of first cells operating on each one of the N carriers;
- in the case where the N carriers are evenly deployed over the wireless communication network, each second cell may choose dynamically and randomly each carrier for each scheduled PRS time interval among these N carriers;
- each second cell may choose each carrier for each scheduled PRS time interval among the N carriers, dynamically and randomly based on a Round Robin mechanism;
- in the case where the N carriers are not evenly deployed over the wireless communication network, each second cell may choose a carrier that is the less used in its area among these N carriers for every scheduled PRS time interval;
- in the case where the carriers are aggregated into M bands, each second cell may transmit its signals over a corresponding one of these M bands during each scheduled PRS time interval, while blanking the M-1 remaining bands, and over any one of these M bands between the scheduled PRS time intervals.

In another embodiment, a computer program product comprises a set of instructions arranged, when it is executed by processing means, for performing the method presented above to transmit signals on N carriers from second cell(s) of a wireless communication network to communication equipments, this wireless communication network further comprising first cells participating in an OTDOA method comprising transmission of PRSs during scheduled PRS time intervals, while the second cells are not participating in OTDOA.

In another embodiment, a device is intended for controlling transmission of signals on N carriers from a second cell of a wireless communication network to communication equipments, this wireless communication network further comprising first cells participating in an OTDOA method comprising transmission of PRSs during scheduled PRS time intervals, and this second cell does not participating in OTDOA. This control device is arranged for scheduling signal transmission of the second cell over a corresponding one of the N carriers during each scheduled PRS time interval, while blanking the N-1 remaining carriers, and over any one of the N carriers between the scheduled PRS time intervals.

In another embodiment, a base station is intended for equiping a wireless communication network implementing an OTDOA method comprising transmission of PRSs during scheduled PRS time intervals, this base station being not participating in OTDOA and comprising the control device presented above.

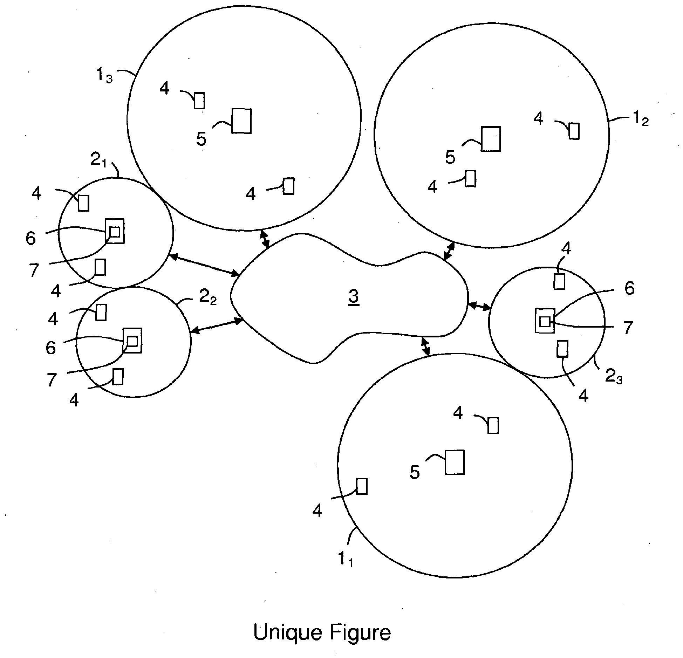

### Brief Description of the Figure

Some embodiments of method and device in accordance with embodiments of the present invention are now described, by way of example only, and with reference to the accompanying drawing, in which the unique Figure schematically and functionally illustrates an example of embodiment of a wireless communication network comprising base stations comprising a control device according to the invention.

### Description of Embodiments

Hereafter is notably disclosed a method intended for controlling transmission of signals on N carriers from first 1ᵢ and second 2ⱼ cells of a wireless communication network 3 to wireless communication equipments 4.

In the following description a first cell 1ᵢ is a network cell comprising a base station 5 participating in an Observed Time Difference Of Arrival (or OTDOA) method, and therefore is notably arranged for transmitting Positioning Reference Signals (or PRSs), during scheduled PRS time intervals and on N carriers, to (wireless) communication equipments 4 temporarily attached to it to allow them to be localized accurately during an emergency call. Such a first cell 1ᵢ is also arranged for exchanging signals with communication equipments 4 temporarily attached to it and with its core network. So it could be, for instance, a "macro cell".

Moreover in the following description a second cell 2ⱼ is a network cell comprising a base station 6 that does not participate to OTDOA and therefore does not implement OTDOA blanking. It is "only" arranged for exchanging signals on N carriers with communication equipments 4 temporarily attached to it and with its core network. So it could be, for instance, a "small cell".

The communication equipments 4 are notified by their serving cell of the neighboring cells (IDs and carrier that transmit PRS) to be heard/detected for localization.

As mentioned before the first 1ᵢ and second 2ⱼ cells operate on N possible carriers having respective frequencies fₖ (with k = 1 to N), either through carrier aggregation or simply through multiple carriers operation.

In the non-limiting example of embodiment illustrated in the unique Figure, the wireless communication network 3 comprises three first cells 1₁, 1₂ and 1₃ (i = 1 to 3), and three second cells 2₁ to 2₃ (j = 1 to 3). But the wireless communication network 3 may comprise any number of first cells 1ᵢ, since this last number is at least equal to three, and any number of second cells 2ⱼ, since this last number is at least equal to one.

As mentioned before, the invention proposes notably a method intended for controlling transmission of signals on N carriers from the first 1ᵢ and second 2ⱼ cells of the wireless communication network 3 to communication equipments 4.

This method comprises scheduling signal transmission of each second cell 2ⱼ over a corresponding one of the N carriers during each scheduled PRS time interval, while blanking the N-1 remaining carriers, and over any one of these N carriers between the scheduled PRS time intervals. The corresponding carrier of a second cell 2ⱼ can be chosen by the latter or by a network supervisor.

So, the probability of "collisions" between data resources assignments from non-OTDOA cells (or second cells) 2ⱼ and PRS resources allocated by the OTDOA cells (or first cells) 1ᵢ is significantly reduced. Moreover, this allows minimizing interferences of PRS by PDSCH (transmitted by the second cells 2ⱼ), which maximizes PRS hearability and therefore OTDOA localization performances during an emergency call. More, by enabling signal transmission (instead of muting, which is the case for OTDOA blanking), the capacity of the second cells 2ⱼ is much less impacted than with OTDOA blanking solution.

Such a process may be implemented by devices 7 equiping respectively the base stations 6 of the second cells 2ⱼ.

Such devices 7 are preferably made of software modules. But they could be also made of a combination of hardware and software modules, by means of FPGA or ASIC for instance. In the case where they are made of software modules, they can be stored in memories, possibly after having been downloaded, or in any computer software product.

For instance, each second cell 2ⱼ, and more precisely its device 7, may choose one of the N carriers for each scheduled PRS time interval (or occasion) depending on a chosen metric. This metric may be, for instance, representative of the density of first cells 1ᵢ operating on each one of the N carriers.

In the case where the N carriers are evenly deployed over the wireless communication network 3 (i.e. in the case of a balanced deployment over all the possible carriers), each second cell 2ⱼ may choose dynamically and randomly each carrier for each scheduled PRS time interval among these N carriers. So, the interferences are uniformly distributed over all the possible N PRS carriers, and therefore the PRS hearability is much less impacted.

For instance, each second cell 2ⱼ may choose each carrier for each scheduled PRS time interval among the N carriers, dynamically and randomly based on a Round Robin mechanism.

In the case where the N carriers are not evenly deployed over the wireless communication network 3 (i.e. in the case of unbalanced rollout of these carriers), each second cell 2ⱼ may choose systematically the corresponding carrier that is the less used in its area among the N carriers for every scheduled PRS time interval. So, the same carrier is chosen by a second cell 2ⱼ for signal transmission during any one of the scheduled PRS time intervals, which means that during these scheduled PRS time intervals the N-1 other carriers are muted. So, interference may only occur in a network area on one single carrier, which is, for instance, the least deployed. This allows preserving hearability of PRS on all the most deployed carriers.

It is important to note that in the case where the N carriers are aggregated into M bands, each second cell 2ⱼ may transmit its signals over a corresponding one of these M bands during each scheduled PRS time interval, while blanking the M-1 remaining bands, and over any one of these M bands between the scheduled PRS time intervals. In other words, in the case where carrier aggregation (or CA) is implemented, signals are transmitted on one single carrier band out the M aggregated bands.

Interference on the different carriers is then minimized over the whole carriers. In addition, a fair usage of each carrier operated by a second cell is guaranteed during PRS instances.

Unlike OTDOA blanking that mutes transmission during the PRS time intervals, which impacts the second cells capacity, the invention leverages the multi carriers capability of the wireless communication network to decrease interference of PRSs while transmitting.

It should be appreciated by those skilled in the art that any block diagram herein represent conceptual views of illustrative circuitry embodying the principles of the invention.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method for transmitting signals on N carriers from first (1ᵢ) and second (2ⱼ) cells of a wireless communication network (3) to communication equipments (4), said first cells (1ᵢ) participating in an Observed Time Difference Of Arrival method, hereafter called OTDOA and comprising transmission of Positioning Reference Signals, hereafter called PRSs, during scheduled PRS time intervals, while said second cell(s) (2ⱼ) is not participating in OTDOA, said method comprising scheduling signal transmission of each second cell (2ⱼ) over a corresponding one of said N carriers during each scheduled PRS time interval, while blanking the N-1 remaining carriers, and over any one of said N carriers between said scheduled PRS time intervals.

2. Method according to claim 1, wherein each second cell (2ⱼ) chooses one of said N carriers for each scheduled PRS time interval depending on a chosen metric.

3. Method according to claim 2, wherein said metric is representative of a density of first cells (**1ᵢ**) operating on each one of said N carriers.

4. Method according to claim 3, wherein in the case where said N carriers are evenly deployed over said wireless communication network (3), each second cell (2ⱼ) chooses dynamically and randomly each carrier for each scheduled PRS time interval among said N carriers.

5. Method according to claim 4, wherein each second cell (2ⱼ) chooses each carrier for each scheduled PRS time interval among said N carriers, dynamically and randomly based on a Round Robin mechanism.

6. Method according to claim 2, wherein, in the case where said N carriers are not evenly deployed over said wireless communication network (3), each second cell (2ⱼ) chooses a carrier that is the less used in its area among said N carriers for every scheduled PRS time interval.

7. Method according to one of claims 1 to 6, wherein, in the case where said carriers are aggregated into M bands, each second cell (2ⱼ) transmits its signals over a corresponding one of said M bands during each scheduled PRS time interval, while blanking the M-1 remaining bands, and over any one of said M bands between said scheduled PRS time intervals.

8. Computer program product comprising a set of instructions arranged, when it is executed by processing means, for performing the method according to one of the preceding claims to transmit signals on N carriers from second cell(s) (2ⱼ) of a wireless communication network (3) to communication equipments (4), said wireless communication network (3) further comprising first cells (1ᵢ) participating in an OTDOA method comprising transmission of PRSs during scheduled PRS time intervals, while said second cells do not participate to OTDOA.

9. Device (7) for controlling transmission of signals on N carriers from a second cell (2ⱼ) of a wireless communication network (3) to communication equipments (4), said wireless communication network (3) further comprising first cells (1ᵢ) participating in an Observed Time Difference Of Arrival method, hereafter called OTDOA and comprising transmission of Positioning Reference Signals, hereafter called PRSs, during scheduled PRS time intervals, while said second cell (2ⱼ) does not participate in OTDOA, said device (7) being arranged for scheduling signal transmission of said second cell (2ⱼ) over a corresponding one of said N carriers during each scheduled PRS time interval, while blanking the N-1 remaining carriers, and over any one of said N carriers between said scheduled PRS time intervals.

10. Base station (6) for a wireless communication network (3) implementing an Observed Time Difference Of Arrival method, hereafter called OTDOA and comprising transmission of Positioning Reference Signals, hereafter called PRSs, during scheduled PRS time intervals, said base station (6) not participating in OTDOA and comprising a device (7) according to claim 9.

## Patentansprüche

1. Verfahren zur Übermittlung von Signalen auf N Trägern von ersten (1ᵢ) und zweiten (2ⱼ) Zellen eines drahtlosen Kommunikationsnetzes (3) an Kommunikationsgeräte (4), wobei besagte erste Zellen (1ᵢ) an einem Verfahren des Typs Observed Time Difference Of Arrival (OTDOA) teilnehmen, welches die Übermittlung von Positionierungsreferenzsignalen (PRS) genannt, im Verlauf geplanter PRS-Zeitintervalle umfasst, wobei besagte zweite Zelle(n) (2ⱼ) nicht am OTDOA-Verfahren teilnimmt/teilnehmen, wobei besagtes Verfahren die Zeitplanung der Signalübertragung jeder zweiten Zelle (2ⱼ) über einen entsprechenden der besagten N Träger während eines jeden geplanten PRS-Zeitintervalls umfasst, während die N-1 verbleibenden Träger geleert werden, und über einen jeglichen der besagten N Träger zwischen den besagten, eingeplanten PRS-Zeitintervallen.

2. Verfahren nach Anspruch 1, wobei jede zweite Zelle (2ⱼ) für jedes der eingeplanten PRS-Zeitinterwalle in Abhängigkeit von einer ausgewählten Metrik einen der besagten N Träger wählt.

3. Verfahren nach Anspruch 2, wobei besagte Metrik repräsentativ ist für eine Dichte erster Zellen (1ᵢ), die auf jedem der besagten N Träger operieren.

4. Verfahren nach Anspruch 3, wobei in dem Fall, das besagte N Träger gleichmäßig über das besagte, drahtlose Kommunikationsnetz (3) genutzt werden, jede zweite Zelle (2ⱼ) dynamisch und nach dem Zufallsprinzip jeden Träger für jedes eingeplante PRS-Zeitintervall aus besagten N Trägern auswählt.

5. Verfahren nach Anspruch 4, wobei jede zweite Zelle (2ⱼ) jeden Träger für jedes eingeplante PRS-Zeitintervall aus besagten N Trägern auswählt, was dynamisch und nach dem Zufallsprinzip auf der Grundlage eines Round-Robin-Mechanismus erfolgt.

6. Verfahren nach Anspruch 2, wobei in dem Fall, das besagte N Träger nicht gleichmäßig über das besagte, drahtlose Kommunikationsnetz (3) genutzt werden, jede zweite Zelle (2ⱼ) aus besagten N Trägern einen solchen Träger für jedes eingeplante PRS-Zeitintervall auswählt, der in seinem Bereich weniger benutzt wird.

7. Verfahren nach einem der Ansprüche 1 bis 6, wobei in dem Fall, dass besagte Träger in M Bändern aggregiert werden, jede zweite Zelle (2ⱼ) ihre Signale während jedem eingeplantem PRS-Zeitintervall über ein entsprechendes der besagten M Bänder übermittelt, während die M-1 verbleibenden Bänder geleert werden, und über eines der besagen M Bänder zwischen den besagten, eingeplanten PRS-Zeitintervallen.

8. Computerprogramm-Produkt, einen Satz von Anweisungen umfassend, der dafür ausgelegt ist, um dann, wenn er auf Verarbeitungsmitteln ausgeführt wird, das Verfahren nach einem der vorgenannten Ansprüche auszuführen, um Signale auf N Trägern von (einer) zweiten Zelle(n) (2ⱼ) eines drahtlosen Kommunikationsnetzes (3) an Kommunikationsgeräte (4) zu übermitteln, wobei besagtes drahtloses Kommunikationsnetz (3) weiterhin ersten Zellen (1ᵢ) umfasst, die an einem OTDOA-Verfahren teilnehmen, welches das Übermitteln von PRS während PRS-Zeitintervallen umfasst, während besagte zweite Zellen nicht an dem OTDOA-Verfahren teilnehmen.

9. Vorrichtung (7) zur Steuerung der Übermittlung von Signalen auf N Trägern von einer zweiten (2ⱼ) Zelle eines drahtlosen Kommunikationsnetzes (3) an Kommunikationsgeräte (4), wobei das besagte, drahtlose Kommunikationsnetz (3) weiterhin erste Zellen (1ᵢ) umfasst, die an einem Verfahren des Typs Observed Time Difference Of Arrival (OTDOA) teilnehmen, welches die Übermittlung von Positionierungsreferenzsignalen (PRS) genannt, im Verlauf geplanter PRS-Zeitintervalle umfasst, wobei besagte zweite Zelle (2ⱼ) nicht am OTDOA-Verfahren teilnimmt, wobei besagte Vorrichtung (7) ausgelegt ist für die Zeitplanung der Signalübertragung besagter zweiter Zelle (2ⱼ) über einen entsprechenden der besagten N Träger während eines jeden geplanten PRS-Zeitintervalls, während die N-1 verbleibenden Träger geleert werden, und über einen jeglichen der besagten N Träger zwischen den besagten, eingeplanten PRS-Zeitintervallen.

10. Basisstation (6) für ein drahtloses Kommunikationsnetz (3), welche ein OTDOA-Verfahren implementiert, welches die Übermittlung von PRS während eingeplanter PRS-Zeitintervalle umfasst, wobei besagte Basisstation (6) nicht am OTDOA-Verfahren teilnimmt und eine Vorrichtung (7) nach Anspruch 9 umfasst.

## Revendications

1. Procédé de transmission de signaux sur N porteuses depuis des premières (1ᵢ) et des deuxièmes (2ⱼ) cellules d'un réseau de communication sans fil (3) vers des équipements de communication (4), lesdites premières cellules (1ᵢ) participant à une méthode de différence de temps d'arrivée observée, ci-après appelée OTDOA et comprenant la transmission de signaux de référence de positionnement, ci-après appelés PRS, durant des intervalles de temps PRS planifiés, tandis que ladite ou lesdites deuxièmes cellules (2ⱼ) ne participent pas à l'OTDOA, ledit procédé comprenant la planification de la transmission de signal de chaque deuxième cellule (2ⱼ) sur l'une desdites N porteuses correspondante durant chaque intervalle de temps PRS planifié, tout en supprimant les N-1 porteuses restantes, et sur n'importe laquelle desdites N porteuses entre lesdits intervalles de temps PRS planifiés.

2. Procédé selon la revendication 1, dans lequel chaque deuxième cellule (2ⱼ) sélectionne l'une desdites N porteuses pour chaque intervalle de temps PRS planifié en fonction d'une métrique choisie.

3. Procédé selon la revendication 2, dans lequel ladite métrique représente une densité de premières cellules (1ᵢ) fonctionnant sur chacune desdites N porteuses.

4. Procédé selon la revendication 3, dans lequel dans le cas où lesdites N porteuses sont déployées uniformément dans ledit réseau de communication sans fil (3), chaque deuxième cellule (2ⱼ) sélectionne dynamiquement et aléatoirement chaque porteuse pour chaque intervalle de temps PRS planifié parmi lesdites N porteuses.

5. Procédé selon la revendication 4, dans lequel chaque deuxième cellule (2ⱼ) sélectionne chaque porteuse pour chaque intervalle de temps PRS planifié parmi lesdites N porteuses, dynamiquement et aléatoirement sur la base d'un mécanisme « round robin ».

6. Procédé selon la revendication 2, dans lequel, dans le cas où lesdites N porteuses ne sont pas déployées uniformément dans ledit réseau de communication sans fil (3), chaque deuxième cellule (2ⱼ) sélectionne une porteuse qui est la moins utilisée dans sa zone parmi lesdites N porteuses pour chaque intervalle de temps PRS planifié.

7. Procédé selon l'une des revendications 1 à 6, dans lequel, dans le cas où lesdites porteuses sont agrégées en M bandes, chaque deuxième cellule (2ⱼ) transmet ses signaux sur l'une desdites M bandes correspondante durant chaque intervalle de temps PRS planifié, tout en supprimant les M-1 bandes restantes, et sur l'une quelconque desdites M bandes entre lesdits intervalles de temps PRS planifiés.

8. Programme informatique comprenant un ensemble d'instructions conçu, lorsqu'il est exécuté par des moyens de traitement, pour réaliser le procédé selon l'une des revendications précédentes pour transmettre des signaux sur N porteuses depuis une ou des deuxièmes cellules (2ⱼ) d'un réseau de communication sans fil (3) vers des équipements de communication (4), ledit réseau de communication sans fil (3) comprenant en outre des premières cellules (1ᵢ) participant à une méthode OTDOA comprenant la transmission de PRS durant des intervalles de temps PRS planifiés, tandis que lesdites deuxièmes cellules ne participent pas à l'OTDOA.

9. Dispositif (7) destiné à contrôler la transmission de signaux sur N porteuses depuis une deuxième cellule (2ⱼ) d'un réseau de communication sans fil (3) vers des équipements de communication (4), ledit réseau de communication sans fil (3) comprenant en outre des premières cellules (1ᵢ) participant à une méthode de différence de temps d'arrivée observée, ci-après appelée OTDOA et comprenant la transmission de signaux de référence de positionnement, ci-après appelés PRS, durant des intervalles de temps PRS planifiés, tandis que ladite deuxième cellule (2ⱼ) ne participe pas à l'OTDOA, ledit dispositif (7) étant conçu pour planifier la transmission de signal de ladite deuxième cellule (2ⱼ) sur l'une desdites N porteuses correspondante durant chaque intervalle de temps PRS planifié, tout en supprimant les N-1 porteuses restantes, et sur n'importe laquelle des N porteuses entre lesdits intervalles de temps PRS planifiés.

10. Station de base (6) destinée à un réseau de communication sans fil (3) mettant en oeuvre une méthode de différence de temps d'arrivée observée, ci-après appelée OTDOA et comprenant la transmission de signaux de référence de positionnement, ci-après appelés PRS, durant des intervalles de temps PRS planifiés, ladite station de base (6) ne participant pas à l'OTDOA et comprenant un dispositif (7) selon la revendication 9.
